(19) Europäisches Patentamt

European Patent Office

Office européen des brevets

(11) **EP 1 544 698 B1**

(12) **EUROPÄISCHE PATENTSCHRIFT**

(45) Veröffentlichungstag und Bekanntmachung des Hinweises auf die Patenterteilung:
**18.10.2006 Patentblatt 2006/42**

(51) Int Cl.:
*G05B 13/00* (2006.01)     *B62D 5/04* (2006.01)
*H02J 7/14* (2006.01)

(21) Anmeldenummer: 03104858.0

(22) Anmeldetag: **19.12.2003**

(54) **Vorrichtung und Verfahren zur Kontrolle eines Bordnetzes**

Apparatus and method for controlling a power network

Dispositif et méthode pour contrôler un réseau d'énergie électrique

(84) Benannte Vertragsstaaten:
**DE FR GB**

(43) Veröffentlichungstag der Anmeldung:
**22.06.2005 Patentblatt 2005/25**

(73) Patentinhaber: **Ford Global Technologies, LLC, A subsidary of Ford Motor Company Dearborn, MI 48126 (US)**

(72) Erfinder:
• **Rienks, Maurice**
**6291 CJ Vaals (NL)**

• **Hochkirchen, Thomas**
**6291 AJ Vaals (NL)**

(74) Vertreter: **Drömer, Hans-Carsten et al Ford-Werke Aktiengesellschaft, Patentabteilung NH/DRP, Henry-Ford-Strasse 1 50725 Köln (DE)**

(56) Entgegenhaltungen:
**DE-A- 10 318 505     DE-A- 19 807 024**

**Beschreibung**

Die Erfindung betrifft ein Verfahren zur Vorhersage eines zukünftigen Belastungszustandes im Bordnetz eines Kraftfahrzeuges sowie ein Verfahren und eine Vorrichtung zur Kontrolle des Bordnetzes eines Kraftfahrzeuges.

Moderne Kraftfahrzeuge sind durch eine zunehmende Anzahl elektrischer und elektronischer Einrichtungen gekennzeichnet, welche vom elektrischen Bordnetz des Kraftfahrzeuges mit Energie versorgt werden müssen. Dabei führen bestimmte Verbraucher - wie beispielsweise ein elektrisches Lenkunterstützungssystem - häufig zu Problemen, da diese kurzzeitig sehr hohe Belastungsspitzen im Bordnetz verursachen können, welche die aktuelle Kapazität des Bordnetzes übersteigen.

Aus der DE 198 07 024 A1 ist ein Regler für eine elektrische Servolenkung für ein Kraftfahrzeug bekannt. Der Regler ist so ausgebildet, dass er eine Verringerung der Speisespannung eines Lenkhilfemotors voraussagt und eine Leerlaufdrehzahl-Erhöhung durchführt, wenn ein Absinken der Speisespannung vorhergesagt wird.

Die DE 193 18 505 A1 offenbart ein elektronisches Servolenkungssystem sowie ein Verfahren bei dem Fahrzeugbetriebsparameter verwendet werden, um zukünftige Stromerfordernisse des Servolenkungssystems vorauszusagen. Auf Basis dieser vorausgesagten Stromerfordernisse, werden Fahrzeugbetriebsparameter, wie zum Beispiel der Motor und ein Wechselstromgeneratorsystem so eingestellt, dass eine geeignete Stromversorgung des Servolenkungssystems ohne Spannungsspitzen oder Spannungseinbrüche gewährleistet ist.

Aufgabe der vorliegenden Erfindung war daher die Bereitstellung von alternativen Mitteln, mit denen die Funktionalität des Bordnetzes eines Kraftfahrzeuges möglichst durchgehend gewährleistet werden kann.

Diese Aufgabe wird durch ein Verfahren mit den Merkmalen des Patentanspruchs 1 und ein Verfahren mit den Merkmalen des Patentanspruchs 8 gelöst. Vorteilhafte Ausgestaltungen sind in den Unteransprüchen enthalten.

Das einem ersten Aspekt der Erfindung entsprechende Verfahren dient der Vorhersage eines zukünftigen Belastungszustandes des elektrischen Bordnetzes eine Kraftfahrzeuges, wobei die Vorhersage basierend auf Parametervektoren erfolgt, die charakteristische Betriebsparameter des Kraftfahrzeuges (zu einem bestimmten Erfassungszeitpunkt) enthalten. Das Verfahren kann beispielsweise derart ausgelegt sein, daß als einer von zwei möglichen Belastungszuständen des Bordnetzes das Überschreiten eines vorgegebenen Schwellwertes des Stromflusses innerhalb eines vorgegebenen zukünftigen Zeitintervalls definiert wird. Das Verfahren umfaßt die folgenden Schritte:

a) Zunächst wird der von den Parametervektoren aufgespannte (Vektor-)Raum in disjunkte Vorhersagezonen unterteilt, wobei eine jede Vorhersagezone einem bestimmten Belastungszustand des Bordnetzes zugeordnet ist. Dabei wird die Unterteilung des Raumes adaptiv anhand von Beispieldaten vorgenommen, die zu verschiedenen Zeitpunkten gemessene Parametervektoren und die jeweils zugehörigen beobachteten Belastungszustände enthalten (wobei der "zugehörige Belastungszustand" in der Regel mit zeitlichem Abstand nach dem Parametervektor gemessen worden ist).

b) Die Erfassung eines "aktuellen Parametervektors", welcher zu einem aktuellen Zeitpunkt gehört und zu dem eine Vorhersage des kommenden Belastungszustandes gewünscht ist.

c) Die Ermittlung der Vorhersagezone, in welcher der gemäß Schritt b) erfaßte aktuelle Parametervektor liegt. Der dieser Vorhersagezone zugeordnete Belastungszustand wird sodann als die gesuchte Vorhersage des zukünftigen Belastungszustandes des Bordnetzes bereitgestellt.

Das Verfahren ermöglicht die Vorhersage zukünftiger Belastungen des Bordnetzes anhand von aktuell gemessenen Parametervektoren, wobei das Vorhersagemodell empirisch aus Beispieldaten gewonnen wird. Es ist dabei nicht erforderlich, funktionale Zusammenhänge zwischen Betriebsparametern des Kraftfahrzeuges und einem zukünftigen Stromverbrauch zu kennen oder zu analysieren. Derartige Zusammenhänge werden vielmehr durch ein Adaptationsverfahren aus den Beispieldaten extrahiert und in eine Vorhersagezonen-Unterteilung des Parameterraumes umgesetzt. Die mit dem Verfahren gewonnenen Vorhersagen über die zukünftige Belastung können in vorteilhafter Weise dazu verwendet werden, einer Überschreitung der Kapazitätsgrenzen des Bordnetzes entgegenzuwirken und hierdurch eine durchgehende Funktionsfähigkeit des Netzes sicherzustellen.

Für die Definition der Belastungszustände des Bordnetzes gibt es verschiedene Möglichkeiten. Insbesondere kann ein Belastungszustand des Bordnetzes dadurch definiert sein, daß innerhalb eines vorgegebenen zukünftigen Zeitraums der Stromfluß im Bordnetz oder in einem bestimmten Verbraucher am Bordnetz zumindest vorübergehend in einem vorgegebenen Intervall liegt. Zum Beispiel können durch Vorgabe des Stromintervalls $[\Theta,\infty[$ genau zwei Belastungszustände unterschieden werden, nämlich das Verbleiben des Stromes unter der Schwelle $\Theta$ bzw. das Überschreiten dieser Schwelle innerhalb der nächsten $\tau$ Sekunden nach dem betrachteten Zeitpunkt. Durch die Vorgabe mehrerer derartiger Schwellen können im Prinzip beliebig viele Belastungszustände differenziert werden.

Die Auswahl der Betriebsparameter des Kraftfahrzeuges, welche einen Parametervektor definieren, erfolgt vorzugsweise in Hinblick auf anwendungsspezifische Besonderheiten und bekannte bzw. vermutete funktionale Zusammenhänge von Betriebsparametern und Belastungszuständen im Bordnetz. Insbesondere kann der Parametervektor mindestens eine der nachfolgend aufgezählten Größen und/oder mindestens eine (ein- oder mehrfache) Zeitableitung hiervon enthalten: den Stromfluß im Bordnetz oder in einem bestimmten Verbraucher am Bordnetz; die Änderungsrate des Stromflusses im Bordnetz oder in einem bestimmten Verbraucher am Bordnetz; die Fahrzeuggeschwindigkeit; den Lenkwinkel und/oder die Änderungsrate des Lenkwinkels, wobei diese Größen insbesondere in Hinblick auf Leistungsspitzen einer elektrischen Lenkunterstützung von Bedeutung sind; die Gaspedalstellung; Straßenparameter wie beispielsweise bevorstehende Abzweigungen, Steigungen oder Kurven, wobei die Straßenparameter von einem Navigationssystem bereitgestellt werden können; den Zustand der Blinkanlage zur Fahrtrichtungsanzeige, wobei diese Größe zur Anzeige bevorstehender Lenkmanöver von Bedeutung sein kann.

Die Unterteilung des Raumes der Parametervektoren in Vorhersagezonen mit Hilfe von Beispieldaten kann auf unterschiedliche Weise mit geeigneten Lern- bzw.

Adaptationsalgorithmen erfolgen. Insbesondere kann eine Vorhersagezone durch statistische Kenngrößen der jeweils zugehörigen Untermenge der Beispieldaten charakterisiert bzw. definiert werden. Die zu einer Vorhersagezone "zugehörige Untermenge der Beispieldaten" umfaßt dabei alle Beispieldaten, deren Belastungszustand dem mit der Vorhersagezone verbundenen Belastungszustand entspricht. Mit anderen Worten wird die Gesamtmenge aller Beispieldaten in Untermengen eingeteilt, die jeweils durch einen bestimmten Belastungszustand charakterisiert sind, und innerhalb der Untermengen werden sodann statistische Kenngroßen zur Definition entsprechender Vorhersagezonen ermittelt.

Bei den vorstehend genannten statistischen Kenngrößen kann es sich insbesondere um den Mittelwert $\mu$ und die Kovarianzmatrix $\Sigma$ aller Parametervektoren der jeweiligen Untermenge handeln. Der Mittelwert beschreibt dabei einen charakteristischen oder stellvertretenden Punkt der jeweiligen Untermenge, während die Kovarianz Korrelationen zwischen den Komponenten der Parametervektoren erfaßt.

Die vorstehend genannten statistischen Kenngrößen des Mittelwertes und der Kovarianz können insbesondere wie folgt zur Definition der Vorhersagezonen bzw. zur Zuordnung eines aktuellen Parametervektors S(t) verwendet werden: Ein (beliebiger bzw. aktueller) Parametervektor S wird derjenigen Vorhersagezone zugeordnet, zu welcher er die kürzeste Mahalanobis-Distanz hat, wobei die Mahalanobis-Distanz definiert ist als die Größe $(S-\mu)^T \Sigma^{-1}(S-\mu)$. Wie im Rahmen der Figurenbeschreibung detaillierter erläutert wird, kann auf diese Weise eine leicht auszuwertende und die Beispieldaten gut separierende Klassifizierung gewonnen werden.

Die für Schritt a) des Verfahrens erforderliche Gewinnung von Beispieldaten und die Unterteilung des Raumes der Parametervektoren in Vorhersagezonen kann separat, d. h. für eine Vielzahl von Fahrzeugen einheitlich und fahrerunabhängig erfolgen. Vorzugsweise erfolgt sie indes während des Fahrbetriebes eines Kraftfahrzeuges, so daß die Beispieldaten spezifisch für das individuelle Kraftfahrzeug und den Fahrer sind und sich gegebenenfalls auch zeitlichen Veränderungen anpassen können.

Die Erfindung betrifft ferner ein Verfahren zur Kontrolle des Bordnetzes eines Kraftfahrzeuges, welches durch die folgenden Schritte gekennzeichnet ist:

a) Die Vorhersage eines zukünftigen Belastungszustandes des Bordnetzes mit einem Verfahren der oben beschriebenen Art, d.h. durch Unterteilung eines Parameterraumes in Vorhersagezonen anhand von Beispieldaten und die Zuordnung eines aktuellen Parametervektors in eine derartige Vorhersagezone.

b) Die Steuerung der Leistungsaufnahme von am Bordnetz befindlichen Verbrauchern (Klimageräte, Ventilatoren etc.) und/oder der Leistungsproduktion von am Bordnetz befindlichen Generatoren (Lichtmaschine, Starter-Generator etc.) derart, daß der gemäß Schritt a) vorhergesagte Belastungszustand im Kapazitätsbereich des Bordnetzes bleibt.

Das Verfahren kann durch eine Reduzierung der Leistungsaufnahme von bestimmten Verbrauchern sowie durch die Erhöhung der Leistungseinspeisung sicherstellen, daß bevorstehende Belastungsspitzen nicht zu einer Überlastung des Bordnetzes führen.

Die Erfindung betrifft ferner eine Vorrichtung zur Kontrolle des Bordnetzes eines Kraftfahrzeuges, welche dahingehend ausgebildet ist, ein Verfahren der vorstehend erläuterten Art auszuführen. Die Vorrichtung kann insbesondere durch eine Datenverarbeitungseinrichtung (Mikrocontroller etc.) realisiert werden, welche mit entsprechenden Signaleingängen zur Erfassung eines Parametervektors sowie gegebenenfalls mit Steuerausgängen zur Kontrolle der Leistungsaufnahme von Verbrauchern bzw. der Leistungsproduktion von Generatoren ausgestattet ist.

Das von der Vorrichtung kontrollierte Bordnetz kann insbesondere ein elektrisches Lenkunterstützungssystem, einen elektrischen Kompressor für den Verbrennungsmotor und/oder einen Ventilator für den Verbrennungsmotor enthalten. Bei diesen Komponenten handelt es sich um Einrichtungen, welche durch einen Verbrauch mit Belastungsspitzen gekennzeichnet sind, so daß ein vorausschauendes Management des Bordnetzes hierfür besonders wichtig ist.

Die Erfindung wird nachfolgend anhand der Figuren beispielhaft näher erläutert. Es zeigen:

Fig. 1 einen typischen Verlauf der Stromaufnahme durch ein elektrisches Lenkunterstützungssystem;

Fig. 2 die Stromaufnahme eines Lenkunterstützungssystems mit einer Kennzeichnung von Zeitpunkten mit einem nachfolgenden hohen Belastungszustand;

Fig. 3 die Stromaufnahme eines Lenkunterstützungssystems mit einer Kennzeichnung der tatsächlichen und der vorhergesagten Zeitpunkte mit einem nachfolgenden hohen Belastungszustand;

Fig. 4 die Verteilung von Beispieldaten mit einem zweidimensionalen Parametervektor und die Anwendung einer euklidischen Distanz zur Unterscheidung von Vorhersagezonen, und

Fig. 5 die Daten von Figur 4 bei Anwendung einer Mahalanobis-Distanz zur Unterscheidung von Vorhersagezonen.

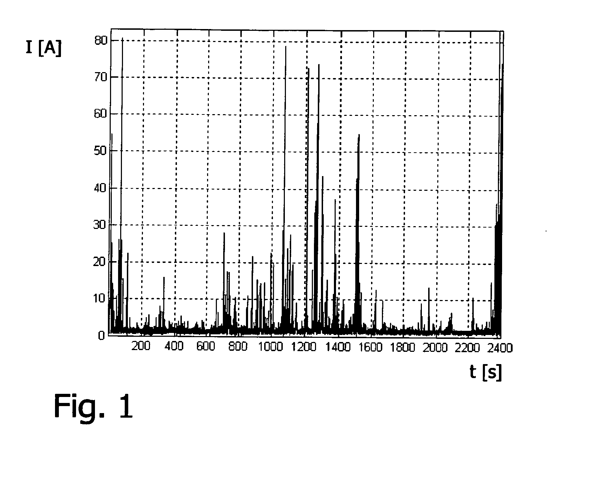

Figur 1 zeigt einen typischen zeitlichen Verlauf der Stromaufnahme I eines elektrischen Lenkunterstützungssystems (EPAS: Electric Power Assisted Steering) eines Kraftfahrzeuges. Während die über die Fahrzeit gemittelte Leistungsaufnahme eines solchen Systems verhältnismäßig gering ist, weist der Verlauf immer wieder sehr kurze Stromspitzen von bis zu 100 A auf. Derartige Stromspitzen können für die Stabilität des elektrischen Bordnetzes des Kraftfahrzeuges ein Problem darstellen. Daher wird vorliegend ein Verfahren vorgeschlagen, bei welchem basierend auf einer statistischen Mustererkennung im Voraus Situationen erkannt werden sollen, in denen ein Lenkunterstützungssystem oder ein anderes System wie beispielsweise ein elektrisch angetriebener Dieselkompressor (EDC) oder ein Lüftermotor für einen Verbrennungsmotor zur Stromspitzen führen. Basierend auf dieser Vorhersage kann dann eine Steuereinrichtung für das Bordnetz entsprechend reagieren, um eine Überschreitung der Kapazitäten des Bordnetzes und hohe Fluktuationen der Spannung zu vermeiden. Insbesondere kann die Steuereinrichtung dabei die Leistungsaufnahme von weniger kritischen Verbrauchern wie beispielsweise Heizeinrichtungen für kurze Zeit reduzieren, hinauszögern oder abschalten. Ebenso kann die Steuereinrichtung auch die Leistungseinspeisung durch einen Generator (Lichtmaschine etc.) herauf fahren, um die Bereitstellung ausreichender Leistung zu garantieren.

Bei der nachfolgend näher erläuterten beispielhaften Ausführung des erfindungsgemäßen Verfahrens wird ausgehend von einem gegebenen Zeitpunkt t ein (zukünftiger) Belastungszustand des Bordnetzes als eine (EPAS-) Stromspitze von mehr als $\Theta$ A innerhalb der nächsten $\tau$ Sekunden, d.h. im Zeitintervall $[t,t+\tau]$, definiert. Die zu lösende Aufgabe besteht dann darin, mit Hilfe eines n-dimensionalen Parametervektors $S(t) = (S_1(t), ...S_n(t))$ aus Signalen verschiedener Betriebszustände des Kraftfahrzeuges zu dem gegebenen Zeitpunkt t das Auftreten des Belastungszustandes vorherzusagen. In diesem Zusammenhang soll die erste Komponente $S_1(t)$ des Parametervektors der momentane Wert des EPAS-Stromflusses sein.

Formal wird diese Aufgabe durch eine Vorhersagefunktion $CPD_{\Theta,\tau}(S(t))$ gelöst mit

$$CPD_{\Theta,\tau}(S(t)) = 1, \qquad \text{falls eine Stromspitze detektiert wird,}$$

$$CPD_{\Theta,\tau}(S(t)) = 0, \qquad \text{falls keine Stromspitze detektiert wird.}$$

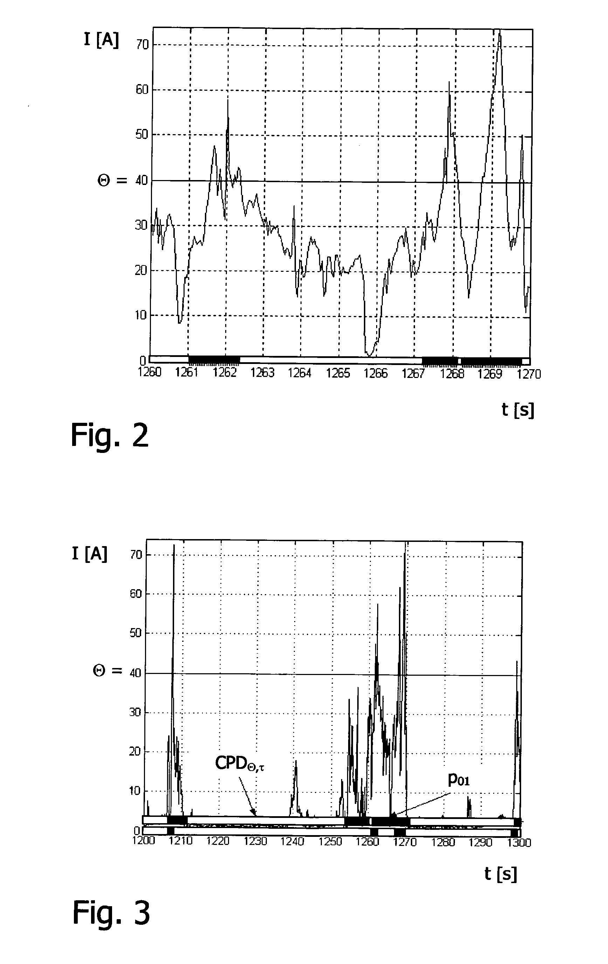

In Figur 2 ist diesbezüglich ein Verlauf des EPAS-Stromes I über der Zeit dargestellt, wobei schwarze Bereiche des über der Zeitachse eingefügten horizontalen Balkens Situationen anzeigen, bei denen innerhalb der nächsten $\tau$ = 0.5s ein Strom-Schwellwert von $\Theta$ = 40 A überschritten wird.

Die Konstruktion einer Vorhersagefunktion $CPD_{\Theta,\tau}$, welche dem in Figur 2 gezeigten Ideal möglichst nahe kommt, soll mit Hilfe von $v$ gemessenen Parametervektoren als Beispieldaten erfolgen. Diese Parametervektoren werden zur formalen Behandlung des Problems nachfolgend als die Zeilen einer Matrix D mit $v$ Zeilen und n Spalten aufgefaßt, wobei die Zeile i den Vektor

$$S(t(i)) = (I(t(i)), S_2(t(i)), ..., S_n(t(i)))$$

enthält, welcher zum Zeitpunkt $t(i) = i \times \textit{Abtastfrequenz}$ der i-ten Messung gehört.

Um eine bestimmte Vorhersagefunktion $CPD_{\Theta,\tau}$ mit Hilfe von Testdaten bewerten zu können, werden die nachfolgenden vier Situationen unterschieden und ihr prozentualer Zeitanteil $p_{xy}$ berechnet:

| Real | Vorhergesagt | Bewertung | $p_{xy}$ |
|------|--------------|-----------|----------|
| Keine Spitze | Keine Spitze | Detektion korrekt | $p_{00}$ |
| Keine Spitze | Spitze | Fehlalarm | $p_{01}$ |
| Spitze | Keine Spitze | Nicht detektierte Spitze | $p_{10}$ |
| Spitze | Spitze | Detektion korrekt | $p_{11}$ |

Für eine gegebene Menge von Testdaten tritt zu jedem gegebenen Zeitpunkt (Abtastpunkt) eine der vier oben genannten Situationen auf. Figur 3 zeigt diesbezüglich für Testdaten des Stromverlaufes I analog zu Figur 2 die korrekte Vorhersagefunktion (unterer Balken) sowie die Vorhersage einer berechneten Vorhersagefunktion $CPD_{\Theta,\tau}$ (oberer Balken). Abweichungen zwischen den beiden Balken repräsentieren die Vorhersagefehler und tragen daher zu den Prozentsätzen $p_{01}$ bzw. $p_{10}$ bei. Diese Prozentsätze können dabei als erstes Qualitätsmaß für die berechnete Vorhersagefunktion verwendet werden.

Interessantere Maßstäbe als die reinen Prozentsätze sind indes die folgenden beiden Größen, welche den Prozentsatz von Fehlalarmen bzw. von nicht detektierten Belastungszuständen beschreiben:

$$E_1 = p_{01}/(p_{00}+p_{01}) \text{ (Fehlalarm)}$$

$$E_2 = p_{10}/(p_{10}+p_{11}) \text{ (nicht detektierte Spitze).}$$

$E_2$ kann dabei als die Fehlerrate angesehen werden, deren Minimierung wichtiger ist, da ihr die nicht detektierten und somit nicht behandelten Stromspitzen entsprechen, während die $E_1$ zugrunde liegenden Fehler "lediglich" zu überflüssigen Regelungsaktionen im Bordnetz führen können.

Bei einer durchgeführten Implementation des Verfahrens wurden Meßdaten verwendet, die von neun verschiedenen (nicht-berufsmäßigen) Fahrern in realen Fahrsituationen gewonnen wurden. Die Fahrer legten dabei eine Gesamtentfernung von 326 km in einer gesamten Fahrzeit von 12:46 Stunden zurück. Der Parametervektor S wurde in diesem Fall durch die folgenden Komponenten definiert:

$S_1$ = EPAS-Strom I[A]
$S_2$ = Fahrzeuggeschwindigkeit [km/h]
$S_3$ = Lenkwinkel [Grad]
$S_4$ = Lenkwinkelrate [Grad/s].

Selbstverständlich könnten bei Modifikationen oder Weiterbildungen des Verfahrens auch andere als die genannten Größen berücksichtigt werden, insbesondere die Änderungsrate des EPAS-Stromes

$$S_5(t(i)) = (S_1(t(i))-S_1(t(i-1)))/(t(i)-t(i-1)).$$

Für die Berechnung von $S_5$ müßte dabei der vorangehende Stromwert $S_1(t(i-1))$ zwischengespeichert werden.
Das Verfahren besteht grundsätzlich aus den folgenden beiden Schritten:

- In einem ersten Schritt wird ein (willkürlich ausgewählter) Teil der Meßdaten, die sog. Beispieldaten oder "Lerndaten", in zwei Untermengen aufgeteilt: die erste Untermenge $G_0$ besteht dabei definitionsgemäß aus allen Beispieldaten, bei denen kein nachfolgender Belastungszustand (Stromspitze) beobachtet wurde, während die zweite Untermenge $G_1$ aus allen restlichen Beispieldaten besteht, bei denen also eine Stromspitze von mehr als $\Theta$ A innerhalb der nächsten $\tau$ Sekunden auftritt. Für beide Untermengen $G_0$, $G_1$ werden dann weiter unten noch genauer zu definierende statistische Kenngrößen berechnet, die die gesuchte Vorhersagefunktion definieren.

- Im zweiten Schritt werden (aktuelle) Parametervektoren, für welche eine Vorhersage gewünscht ist, mit den vorstehend genannten Kenngrößen verglichen, um zu entscheiden, welcher Situation bzw. welcher Untermenge der Beispieldaten sie näher kommen. Diese "näher gelegene" Situation (Belastungszustand folgt bzw. kein Belastungszustand folgt) wird dann als vorhergesagter Wert verwendet.

Bei der Beurteilung einer gemäß dem ersten Schritt ermittelten Vorhersagefunktion anhand von "Testdaten" sollte darauf geachtet werden, daß die Lerndaten und die Testdaten unterschiedlich sind, da gute Vorhersagen auf den Lerndaten zwar eine notwendige Bedingung sind, jedoch ein schlechtes Maß für die Fähigkeit zur Verallgemeinerung. In diesem Sinne wurden aus den oben erläuterten gesamten Meßdaten neun Sätze von Testdaten erzeugt, die jeweils den Daten eines Fahrers entsprachen, wobei die zugehörigen Lerndaten durch die Daten der restlichen Fahrer gebildet wurden.

Nachfolgend werden die bereits erwähnten statistischen Kenngrößen für die Untermengen $G_0$ und $G_1$ näher erläutert. Hierbei handelt es sich zum einen um die Mittelwerte

$$\mu_0 = (<S_1>_0, \ldots, <S_n>_0)$$

$$\mu_1 = (<S_1>_1, \ldots, <S_n>_0),$$

welche für jede Untermenge separat berechnet werden, d.h. mit den folgenden Definitionen:

$$< S_k >_0 = \sum_{i \in G_0} \frac{S_k(t(i))}{|G_0|} \quad \text{und} \quad < S_k >_1 = \sum_{i \in G_1} \frac{S_k(t(i))}{|G_1|} \quad .$$

Als weitere Kenngrößen werden die Kovarianzmatritzen

$$\sum_0 = \left( \mathrm{cov}_0(S_i, S_j) \right)_{\substack{1 \le i \le n \\ 1 \le j \le n}} = \left\langle \left( (S_i - <S_i>_0) \cdot (S_j - <S_j>_0) \right)_0 \right\rangle_{\substack{1 \le i \le n \\ 1 \le j \le n}} \in R^{n \times n}$$

und

$$\sum_1 = \left( \mathrm{cov}_1(S_i, S_j) \right)_{\substack{1 \le i \le n \\ 1 \le j \le n}} \in R^{n \times n}$$

für die beiden Untermengen $G_0$ und $G_1$ berechnet. Ausgehend hiervon kann der Wert der gesuchten Vorhersagefunktion $CPD_{\Theta,\tau}$ für einen aktuellen Parametervektor $S(t)$ gemäß dem folgenden, symbolisch notierten Algorithmus berechnet werden:

ERMITTLE S(t)

BERECHNE

$$d0 = (S(t) - \mu_0)^T \Sigma_0^{-1} (S(t) - \mu_0) \qquad\qquad (1)$$

$$d1 = (S(t) - \mu_1)^T \Sigma_1^{-1} (S(t) - \mu_1) \qquad\qquad (2)$$

```
IF min(d0, d1)==d0 THEN
CPD_Θ,τ(S(t)) = 0
ELSE
CPD_Θ,τ(S(t)) = 1
ENDIF
```

Dabei bezeichnet T die Transposition eines Vektors und "-1" die Inversion einer Matrix.

Der beschriebene Algorithmus kann schnell und einfach implementiert werden. Der Einfluß der Größen $\Theta$ und $\tau$, welche den Belastungszustand definieren, ist dabei indirekt, da er die Aufteilung der Beispieldaten in die Untermengen $G_0$ und $G_1$ und somit die hieraus abgeleiteten statistischen Kenngrößen beeinflußt.

Die grundlegende Idee des Algorithmus besteht darin, die Mittelwertvektoren $\mu_0$ und $\mu_1$ als Muster zu verstehen, welche repräsentative Situationen bzw. typische Werte charakterisieren. Ein aktueller Parametervektor S(t) wird dann der Klasse desjenigen Musters zugeordnet, zu dem er den kleinsten Abstand hat.

Das vorstehend erläuterte Grundprinzip findet sich in obiger Formel (1) und (2) zur Berechnung der Abstände d0 und d1 wieder. Falls die Komponenten der Parametervektoren unkorreliert wären, wären d0 und d1 die euklidischen Abstände von S(t) zu $\mu_0$ und $\mu_1$, da in diesem Falle die Kovarianzmatrizen und ihre Inversen Einheitsmatrizen wären. Ein aktueller Parametervektor S(t) würde somit der Klasse desjenigen Mustervektors $\mu_0$ bzw. $\mu_1$ zugeordnet, zu dem dieser den geringsten euklidischen Abstand aufweist.

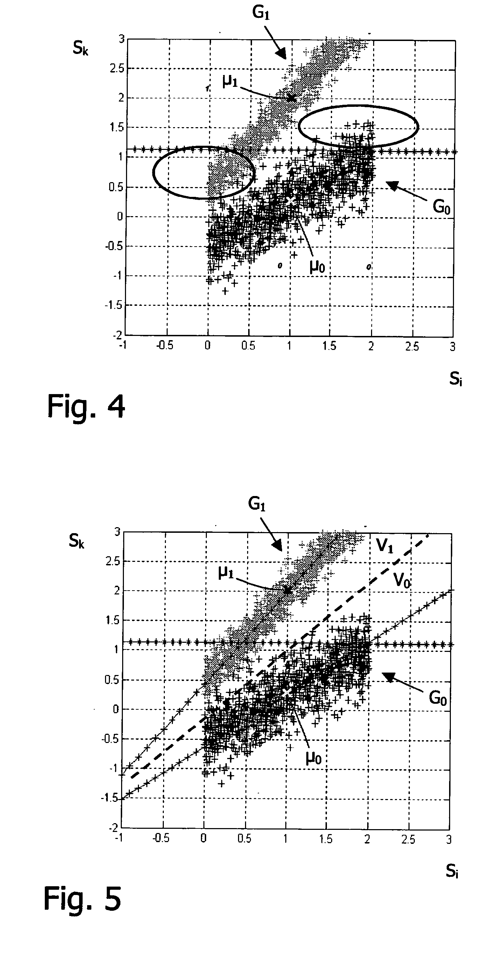

Häufig sind indes die Komponenten der Parametervektoren miteinander korreliert. Figur 4 zeigt diesbezüglich eine typische Verteilung von zwei Komponenten $S_i$, $S_k$ der Parametervektoren von Beispieldaten (Kreuze). Unmittelbar erkennbar ist, daß sich die Beispieldaten auf zwei Cluster verteilen, welche den Untermengen $G_0$ (kein anschließender Belastungszustand beobachtet) und $G_1$ (anschließender Belastungszustand beobachtet) entsprechen. Aufgrund einer Korrelation der Vektorkomponenten $S_i$, $S_k$ haben die Cluster jeweils eine langgestreckte Form, wobei die Mittelwerte $\mu_0$ und $\mu_1$ im Zentrum der Cluster $G_0$ bzw. $G_1$ liegen. Würden neue (aktuelle) Parametervektoren entsprechend ihrer kürzesten Entfernung zu den Mustern bzw. Mittelwerten $\mu_0$ und $\mu_1$ klassifiziert, so würde die Parameterebene entlang der in Figur 4 eingetragenen horizontalen Linie in zwei Zonen unterteilt. Dabei käme es jedoch offensichtlich in den eingekreisten Bereichen zu fehlerhaften Klassifikationen.

Eine solche Fehlklassifikation kann durch die Verwendung der sog. Mahalanobis-Distanzen d0 und d1 gemäß Gleichung (1) und (2) vermieden werden. Die Verwendung dieses Maßes führt nämlich dazu, daß entsprechend den Kovarianzen zwischen den Signalen eine Transformation stattfindet, so daß die "euklidischen Kreise" von Punkten mit gleicher Entfernung zu $\mu_0$ bzw. $\mu_1$ durch Ellipsen ersetzt werden, deren Achsen die Korrelationen zwischen den Parameterkomponenten berücksichtigen. In Figur 5 sind für die Beispieldaten von Figur 4 die entsprechenden Achsen durch die Untermengen $G_0$ und $G_1$ eingezeichnet. Ferner ist als gestrichelte Linie die "Mahalanobis-Entscheidungsgrenze" eingetragen, die die Parameterebene in die beiden Vorhersagezonen (Halbebenen) $V_0$ und $V_1$ unterteilt und die genau zwischen den genannten Achsen liegt, was Fehlklassifikationen in hohem Maße verhindert. Punkte, die auf der Entscheidungsgrenze selbst liegen, können dabei z.B. definitionsgemäß der Zone $V_0$ zugeordnet werden.

Die Anwendung des vorstehend erläuterten Algorithmus auf die Meßdaten und die zugehörige Auswertung der erhaltenen Vorhersagefunktion für jeden Fahrer führt zu den folgenden Ergebnissen:

$(\Theta,\tau) = (30A, 1.0 sec)$

| Fahrer | 1 | 2 | 3 | 4 | 5 | 6 | 7 | 8 | 9 | gew. Mittelwert |
|---|---|---|---|---|---|---|---|---|---|---|
| gesamte Fahrzeit (Min.) | 49 | 67 | 70 | 105 | 65 | 105 | 173 | 44 | 88 | |
| $E_1$ (Fehlalarm) | 2,9% | 13,8% | 6,6% | 10,5% | 12,2% | 4,0% | 7,7% | 8,4% | 7,4% | 8,1% |
| $E_2$ (nicht detektierte Spitze) | 29,6% | 4,5% | 9,2% | 4,9% | 6,1% | 3,1% | 8,9% | 0,0% | 5,3% | 7,4% |

Die folgende Tabelle zeigt Beispielwerte für $\mu_0$ und $\mu_1$, die in obigen Berechnungen verwendet wurden. Die großen Differenzen zwischen diesen Werten erklären den Erfolg des Verfahrens, da sie eine deutliche Unterscheidung von aktuellen Parametervektoren erlauben.

|  | $\mu_0$ | $\mu_1$ |
|---|---|---|
| EPAS Strom [A] | 1.9 | 27.6 |
| Fahrzeug-Geschwindigkeit [km/h] | 25.9 | 2.8 |
| Lenkwinkel [°] | 36.0 | 290.5 |
| Lenkwinkelrate [°/s] | 17.4 | 201.1 |

Die nachfolgende Tabelle gibt die Ergebnisse bei anderen Werten für den Stromfluß-Schwellwert $\Theta$ und den Zeitwert $\tau$ wieder:

$(\Theta, \tau)$ = (40A, 0.5 sec)

| Fahrer | 1 | 2 | 3 | 4 | 5 | 6 | 7 | 8 | 9 | gew. Mittelwert |
|---|---|---|---|---|---|---|---|---|---|---|
| $E_1$ (Fehlalarm) | 1,9% | 10,0% | 4,1% | 7,8% | 9,8% | 2,9% | 6,0% | 5,9% | 5,2% | 6,0% |
| $E_2$ (nicht detektierte Spitze) | 7,6% | 2,2% | 2,0% | 1,5% | 4,7% | 0,3% | 1,9% | 0,0% | 5,3% | 2,6% |

Die sich hierin andeutende Tendenz kann durch eine vollständige Analyse der gewichteten Mittelwerte von $E_1$ und $E_2$ dahingehend bestätigt werden, daß die Qualität des Vorhersagealgorithmus mit einem Anstieg in $\Theta$ und/oder mit einer Abnahme in $\tau$ zunimmt.

Die für das beschriebene Verfahren erforderliche Berechnung von Kenngrößen $\mu_0$, $\mu_1$, $\Sigma_0$, $\Sigma_1$ kann außerhalb des Fahrzeugs vorab für ein bestimmtes Kraftfahrzeug und ein bestimmtes EPAS-System erfolgen. Wie die obigen Daten zeigen, ist eine fahrerunabhängige (nicht-adaptive) Berechnung der Parameter hinreichend genau.

Ebenso ist es jedoch auch möglich, die benötigten Daten für die Ableitung der Kenngrößen an Bord des Kraftfahrzeuges (adaptiv) zu sammeln. Um dabei die Notwendigkeit einer übermäßigen Zwischenspeicherung von Daten zu vermeiden, werden vorzugsweise rekursive Formeln zur Abschätzung der Parameter verwendet. So kann beispielsweise der Wert $\mu(n)$, d. h. der Schätzwert des Mittelwertvektors einer Untermenge zum Abtastzeitpunkt n, gemäß der folgenden Formel berechnet werden

$$\mu(n) = \frac{1}{n}\left((n-1) * \mu(n-1) + S(n)\right).$$

Auch die Kovarianz kann rekursiv bestimmt werden gemäß der Formel

$$\text{cov}_n(S_i, S_j) = \frac{(n-2)}{(n-1)} * \text{cov}_{n-1}(S_i, S_j) + \frac{1}{n} * (\mu_i(n-1) - S_i(n)) * (\mu_j(n-1) - S_j(n))$$

wobei $\text{cov}_n(S_i, S_j)$ die Kovarianz zwischen $S_i$ und $S_j$ nach n Messungen bedeutet und $\mu_i(n-1)$ für den Mittelwert des Signals $S_i$ nach den ersten (n-1) Messungen steht.

In Erweiterung des oben beschriebenen Algorithmus könnten mehr als zwei Belastungszustände bzw. mehr als zwei Vorhersagezonen berücksichtigt werden. So könnte beispielsweise das Auftreten von einem der folgenden m Ereignisse vorhergesagt werden: "keine Stromspitze", "Stromspitze zwischen $\Theta_1$ A und $\Theta_2$ A", ..., "Stromspitze zwischen $\Theta_{m-1}$ A, und $\Theta_m$ A" in den nächsten $\tau$ Sekunden. Hierbei handelt es sich um eine direkte Verallgemeinerung des oben beschriebenen Verfahrens, wobei lediglich m verschiedene Untermengen definiert werden müssen, die entsprechende Anzahl von Kenngrößen (Mittelwertvektoren und Kovarianzmatritzen) berechnet werden muß, und die Entscheidung um die Berechnung des Minimums von m Distanzen erweitert werden muß.

**Patentansprüche**

1. Verfahren zur Vorhersage eines zukünftigen Belastungszustandes des Bordnetzes eines Kraftfahrzeuges mit Hilfe von Parametervektoren, die charakteristische Betriebsparameter des Kraftfahrzeuges enthalten, umfassend die Schritte:

   a) Unterteilung des Raumes der Parametervektoren (S) in Vorhersagezonen ($V_0$, $V_1$), wobei die Vorhersagezonen verschiedenen Belastungszuständen des Bordnetzes zugeordnet sind und wobei die Unterteilung adaptiv anhand von Beispieldaten ($G_0$, $G_1$) gemessener Parametervektoren und zugehöriger Belastungszustände des Bordnetzes gewonnen wird;
   b) Erfassung des zu einem aktuellen Zeitpunkt (t) gehörenden Parametervektors;
   c) Ermittlung der Vorhersagezone ($V_0$, $V_1$), in welcher der aktuelle Parametervektor liegt, und Verwendung des ihr zugeordneten Belastungszustandes als Vorhersage des zukünftigen Belastungszustandes des Bordnetzes.

2. Verfahren nach Anspruch 1,
   **dadurch gekennzeichnet, daß**
   der Belastungszustand des Bordnetzes dadurch charakterisiert ist, daß innerhalb eines vorgegebenen zukünftigen Zeitraumes ($[t,t+\tau]$) der Stromfluß (I) im Bordnetz oder in einem bestimmten Verbraucher am Bordnetz zumindest vorübergehend in einem vorgegebenen Intervall ($[\Theta,\infty[$) liegt.

3. Verfahren nach Anspruch 1 oder 2,
   **dadurch gekennzeichnet, daß**
   der Parametervektor (S) mindestens eine der folgenden Größen und/oder mindestens eine Zeitableitung hiervon enthält: den Stromfluß (I) im Bordnetz oder in einem bestimmten Verbraucher am Bordnetz; die Änderungsrate des Stromflusses im Bordnetz oder in einem bestimmten Verbraucher am Bordnetz; die Fahrzeuggeschwindigkeit; den Lenkwinkel; die Änderungsrate des Lenkwinkels; die Gaspedalstellung; einen Straßenparameter aus einem Navigationssystem; den Zustand der Blinkanlage.

4. Verfahren nach mindestens einem der Ansprüche 1 bis 3,
   **dadurch gekennzeichnet, daß**
   die Vorhersagezonen ($V_0$, $V_1$) durch statistische Kenngrößen der zugehörigen Untermenge ($G_0$, $G_1$) der Beispieldaten charakterisiert werden.

5. Verfahren nach Anspruch 4,
   **dadurch gekennzeichnet, daß**
   die statistischen Kenngrößen den jeweiligen Mittelwert $\mu$ und die jeweilige Kovarianzmatrix $\Sigma$ der Parametervektoren der Untermenge ($G_0$, $G_1$) umfassen.

6. Verfahren nach Anspruch 5,
   **dadurch gekennzeichnet, daß**
   ein aktueller Parametervektor S(t) derjenigen Vorhersagezone ($V_0$, $V_1$) zugeordnet wird, zu welcher er die kürzeste Mahalanobis-Distanz hat, welche definiert ist als $(S-\mu)^T\Sigma^{-1}(S-\mu)$.

7. Verfahren nach mindestens einem der Ansprüche 1 bis 6,
   **dadurch gekennzeichnet, daß**
   Schritt a) einschließlich der Gewinnung von Beispieldaten während des Fahrbetriebs eines Kraftfahrzeuges ausgeführt wird.

8. Verfahren zur Kontrolle des Bordnetzes eines Kraftfahrzeuges,
   **gekennzeichnet durch** die Schritte

   a) Vorhersage eines zukünftigen Belastungszustandes des Bordnetzes mit einem Verfahren nach mindestens einem der Ansprüche 1 bis 7;
   b) Steuerung der Leistungsaufnahme von Verbrauchern und/oder der Leistungsproduktion von Generatoren derart, daß der vorgesagte Belastungszustand im Kapazitätsbereich des Bordnetzes liegt.

**Claims**

1. Method for prediction of a future load state on the power supply system in a motor vehicle with the aid of parameter vectors which contain characteristic operating parameters of the motor vehicle, comprising the following steps:

   a) subdivision of the space of the parameter vectors (S) into prediction zones ($V_0$, $V_1$), with the prediction zones being associated with different load states of the vehicle power supply system, and with the subdivision being obtained adaptively on the basis of exemplary data ($G_0$, $G_1$) of measured parameter vectors and associated load states of the vehicle power supply system;
   b) detection of the parameter vector which is associated with the present time (t);
   c) determination of the prediction zone ($V_0$, $V_1$) in which the present parameter vector is located, and use of the load state associated with it as a prediction for the future load state of the vehicle power supply system.

2. Method according to Claim 1,
   **characterized in that**
   the load state of the vehicle power supply system is **characterized in that**, within a predetermined future time period ($[t,t+\tau]$), the current flow (I) in the vehicle power supply system or in a specific load on the vehicle power supply system is at least temporarily in a predetermined interval. ($[\Theta\infty[$).

3. Method according to Claim 1 or 2,
   **characterized in that**
   the parameter vector (S) contains at least one of the following variables and/or at least one time derivative of them: the current flow (I) in the vehicle power supply system or in a specific load on the vehicle power supply system; the rate of change of the current flow in the vehicle power supply system or in a specific load on the vehicle power supply system; the vehicle speed; the steering angle; the rate of change of the steering angle; the accelerator pedal position; a route parameter from the navigation system; the state of the turn-indicator system.

4. Method according to at least one of Claims 1 to 3,
   **characterized in that**
   the prediction zones ($V_0$, $V_1$) are **characterized by** statistical variables of the associated subset ($G_0$, $G_1$) of the exemplary data.

5. Method according to Claim 4,
   **characterized in that**
   the statistical characteristic variables comprise the respective mean value $\mu$ and the respective covariance matrix $\Sigma$ of the parameter vectors from the subset ($G_0$, $G_1$).

6. Method according to Claim 5,
   **characterized in that**
   a present parameter vector S(t) is associated with that prediction zone ($V_0$, $V_1$) for which it has the shortest Mahalanobis distance, which is defined as $(S-\mu)^T\Sigma^{-1}(S-\mu)$.

7. Method according to at least one of Claims 1 to 6,
   **characterized in that**
   step a) is carried out, including the process of obtaining exemplary data, while the motor vehicle is being driven.

8. Method for monitoring the power supply system in a motor vehicle,
   **characterized by** the following steps:

   a) prediction of a future load state on the vehicle power supply system using a method according to at least one of Claims 1 to 7;
   b) control of the power consumption of loads and/or of the power production of generators in such a manner that the predicted load state is within the capacity range of the vehicle power supply system.

**Revendications**

1. Procédé pour prédire un futur état de charge du réseau de bord d'un véhicule automobile à l'aide de vecteurs de paramètres qui contiennent les paramètres de fonctionnement caractéristiques du véhicule automobile, comprenant les étapes :

a) Division de l'espace des vecteurs de paramètres (S) en zones de prédiction ($V_0$, $V_1$), différents états de charge du réseau de bord étant associés aux zones de prédiction et la division étant obtenue par adaptation au moyen d'exemples de données ($G_0$, $G_1$) des vecteurs de paramètres mesurés et des états de charge correspondants du réseau de bord ;

b) Acquisition du vecteur de paramètre correspondant à un instant actuel (t) ;

c) détermination de la zone de prédiction ($V_0$, $V_1$) dans laquelle se trouve le paramètre de vecteur actuel et utilisation de l'état de charge qui lui est associé comme prédiction du futur état de charge du réseau de bord.

2. Procédé selon la revendication 1, **caractérisé en ce que** l'état de charge du réseau de bord est **caractérisé en ce qu'**au sien d'une période future prédéfinie ([t, t+π]), le flux de courant (I) dans le réseau de bord ou dans une charge donnée du réseau de bord se trouve au moins temporairement dans un intervalle prédéfini ([Θ, ∞]).

3. Procédé selon la revendication 1 ou 2, **caractérisé en ce que** le vecteur de paramètre (S) contient au moins l'une des grandeurs suivantes et/ou au moins une dérivée dans le temps de celle-ci : le flux de courant (I) dans le réseau de bord ou dans une charge donnée du réseau de bord ; le taux de variation du flux de courant dans le réseau de bord ou dans une charge donnée du réseau de bord ; la vitesse du véhicule ; l'angle de direction ; le taux de variation de l'angle de direction ; la position de la pédale des gaz ; un paramètre de la route provenant d'un système de navigation ; l'état de la centrale clignotante.

4. Procédé selon l'une des revendications 1 à 3, **caractérisé en ce que** les zones de prédiction ($V_0$, $V_1$) sont **caractérisées par** des grandeurs caractéristiques statistiques du sous-ensemble ($G_0$, $G_1$) correspondant.

5. Procédé selon la revendication 4, **caractérisé en ce que** les grandeurs caractéristiques statistiques comprennent la valeur moyenne μ correspondante et la matrice de covariance Σ correspondante du sous-ensemble ($G_0$, $G_1$) .

6. Procédé selon la revendication 5, **caractérisé en ce qu'**un vecteur de paramètre actuel S(t) est associé à la zone de prédiction ($V_0$, $V_1$) par rapport à laquelle il présente la distance de Mahalanobis la plus courte, laquelle est définie sous la forme $(S-\mu)^T \Sigma^{-1} (S-\mu)$.

7. Procédé selon l'une des revendications 1 à 6, **caractérisé en ce que** l'étape a) ainsi que l'acquisition des exemples de données est exécutée pendant le déplacement d'un véhicule automobile.

8. Procédé de contrôle du réseau de bord d'un véhicule automobile, **caractérisé par** les étapes

a) Prédiction d'un futur état de charge du réseau de bord avec un procédé selon au moins l'une des revendications 1 à 7 ;

b) Contrôle de la puissance consommée par les charges et/ou de la puissance produite par les générateurs de telle sorte que l'état de charge prédit se trouve dans la plage de capacité du réseau de bord.

Fig. 1

Fig. 2

Fig. 3

Fig. 4

Fig. 5